# EUROPÄISCHE PATENTSCHRIFT

(11) **EP 1 457 287 B1**
(45) Veröffentlichungstag und Bekanntmachung des Hinweises auf die Patenterteilung: **11.04.2007**
(21) Anmeldenummer: 04004608.8
(22) Anmeldetag: 28.02.2004
(51) Int. Cl.: B23Q 1/00, B23Q 1/01, B23Q 1/26, F16C 29/06

(54) **Führungsschiene für ein Linearlager**
Guide rail for a linear bearing
Rail de guidage pour palier linéaire

(30) Priorität: 10.03.2003 DE 10310324
(43) Veröffentlichungstag der Anmeldung: 15.09.2004
(73) Patentinhaber: AB SKF, S-415 50 Göteborg (SE)
(72) Erfinder: Mayer, Uwe, 97702 Münnerstadt (DE); Edelmann, Ludwig, 97717 Sulzthal (DE); Velde, Henryk, 97440 Werneck (DE); Gransow, Anita, 97526 Sennfeld (DE)
(74) Vertreter: Kohl, Thomas

(56) Entgegenhaltungen:
- DE-A- 10 052 848
- US-A- 4 615 569
- US-A- 5 640 768

## Beschreibung

Die Erfindung betrifft eine Führungsschiene für ein Linearlager, die mindestens zwei Schienenelemente mit einer Führungsbahn für Wälzkörper aufweist, wobei die Schienenelemente mit einem Kunststoffkörper verbunden sind oder an diesem angrenzen, wobei der Kunststoffkörper den Grundkörper der Führungsschiene bildet und wobei die Schienenelemente mit einem metallischen Traggestell verbunden sind, das zumindest teilweise vom Material des Kunststoffkörpers umgeben ist.

Führungsschienen dieser Art sind im Stand der Technik hinlänglich bekannt. Der Grundkörper der Führungsschiene wird aus einem Kunststoffformteil gebildet, in dem mindestens ein Schienenelement angeordnet ist. Das Schienenelement besteht aus Stahl und weist eine geschliffene, gezogene oder gewalzte Führungsbahn für die Wälzkörper des Linearlagers auf. Eine Führungsschiene der eingangs genannten Art ist aus der **US-A 5 640 768** bekannt.

Durch den hybriden Verbund von Kunststoffkörper auf der einen Seite und Schienenelement auf der anderen Seite wird ein relativ leichtes Bauteil geschaffen, das an der Stelle, an der es eine große Härte aufweisen muss, nämlich im Bereich der Führungsbahn für die Wälzkörper, hinreichend fest ausgebildet ist.

Um eine leichte und kostengünstige Linearführung zu schaffen, wird also in einem Kunststoffgrundkörper zur Erhöhung der Tragzahl eine Stahlschiene eingelegt.

Bei der Herstellung gattungsgemäßer Führungsschienen können die Schienenelemente aus Stahl in ein Spritzgießwerkzeug eingelegt und dann mit Kunststoffmaterial umspritzt werden, so dass lediglich die die Führungsbahn der Wälzkörper aufweisende Seite des Schienenelements frei von Kunststoff bleibt. Damit kann eine relativ hohe Genauigkeit erreicht werden, was den Abstand zweier Schienenelemente einer Führungsschiene anbelangt, die gleichzeitig mit Kunststoff umspritzt werden.

Bei derart vorbekannten Führungsschienen hat es sich als nachteilhaft erwiesen, dass diese im Betrieb nicht die benötigte Festigkeit aufweisen. Zwar weist die eingelegte Stahlschiene, die als Schienenelement mit Führungslaufbahn für die Wälzkörper fungiert, hinreichende Festigkeit auf. Allerdings kommt es insbesondere beim Einsatz des Linearlagers bei erhöhten Temperaturen zu Fließerscheinungen im Kunststoff, was die Gesamtsteifigkeit der Führungsschiene wesentlich herabsetzt.

Der Erfindung liegt daher die **Aufgabe** zugrunde, eine Führungsschiene für ein Linearlager der eingangs genannten Art derart weiterzubilden, dass die genannten Vorteile beibehalten werden können, jedoch die erläuterten Nachteile vermieden werden. Es soll insbesondere eine Führungsschiene geschaffen werden, die im Betrieb eine große Festigkeit aufweist und die auch beim Einsatz in einem großen Temperaturbereich nur geringe Änderungen der Geometrie aufweist, insbesondere des Abstandes zweier oder mehrerer mit dem Kunststoffgrundkörper verbundener Schienenelemente.

Die **Lösung** dieser Aufgabe durch die Erfindung ist dadurch gekennzeichnet, dass die Schienenelemente und das metallische Traggestell separate Teile bilden, die vor dem Anbringen des Kunststoffkörpers zusammengebaut werden, wobei das Traggestell definierte Flächen für die Anlage des Schienenelements bzw. der Schienenelementeund deren Positionierung in genau vorgegebener Position aufweist und wobei das Traggestell zwischen den Schienenelementen so angeordnet ist, dass es diese auf Abstand hält.

Vorzugsweise sind die beiden Schienenelemente an sich gegenüberliegenden Endbereichen des Kunststoffkörpers angeordnet.

Mit Vorteil ist nach einer Ausgestaltung vorgesehen, dass das Schienenelement bzw. die Schienenelemente und das Traggestell mit dem Material des Kunststoffkörpers umspritzt sind.

Alternativ dazu kann vorgesehen sein, dass das Schienenelement bzw. die Schienenelemente und/oder das Traggestell mit dem Kunststoffkörper über eine Schnappverbindung verbunden sind.

Eine hohe Präzision der Führungsschiene wird erreicht, weil das Traggestell definierte Flächen für die Anlage des Schienenelements bzw. der Schienenelemente und deren Positionierung in genau vorgegebener Lage aufweist.

Mit der erfindungsgemäßen Ausgestaltung wird erreicht, dass sich insgesamt eine relativ leichte und preiswert herzustellende Führungsschiene ergibt, die durch das vorgesehene metallische Traggestell, das zumindest mit einem Schienenelement verbunden ist, eine hohe Steifigkeit aufweist.

Im Falle dessen, dass eine Führungsschiene mit zwei sich im wesentlichen gegenüberliegenden Schienenelementen zum Tragen kommt, stützt das vorzugsweise umspritzte, metallische Traggestell die beiden Schienenelemente ab und hält sie präzise auf Abstand. Hierdurch wird erreicht, dass auch bei hohen Temperaturen, denen die Führungsschiene ausgesetzt ist, eine relativ hohe geometrische Konstanz erreicht wird, was die Beabstandung der Schienenelemente und damit der Führungsbahnen für die Wälzkörper anbelangt.

In der Zeichnung ist ein Ausführungsbeispiel der Erfindung dargestellt. Es zeigen:
- Figur 1: in dreidimensionaler Ansicht zwei Schienenelemente, die von einem Traggestell auf Abstand gehalten werden,
- Figur 2: die Anordnung gemäß Figur 1, nach dem sie von Kunststoff umspritzt worden ist und
- Figur 3: in perspektivischer Ansicht das Traggestell.

Die zu schaffende Führungsschiene 1 weist im Ausführungsbeispiel zwei sich parallel zueinander gegenüberliegende Schienenelemente 2 auf. Jedes Schienenelement 2 hat eine Führungsbahn 3 für - nicht dargestellte - Wälzkörper (Kugeln); die Führungsbahn 3 ist präzise in das Schienenelement 2 eingeschliffen, gezogen oder gewalzt.

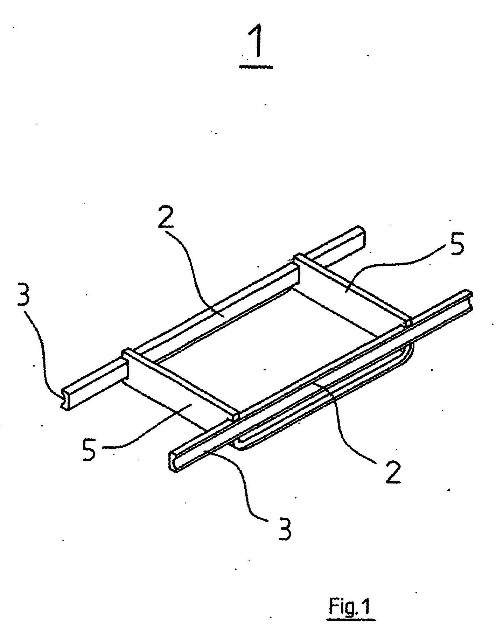

Wie in Figur 1 zu sehen ist, werden die beiden Schienenelemente 2 in einem ersten Teilprozess bei der Herstellung der Führungsschiene in ein Traggestell 5 eingesetzt. Das Traggestell 5 besteht aus Metall (beispielsweise Stahl oder Aluminium) und weist später noch detaillierter beschriebene Flächen zur präzisen Aufnahme der Schienenelemente 2 auf. Diese Aufnahmeflächen sind vorliegend im Querschnitt rechteckig ausgebildet und korrespondieren mit der Querschnittsform der Schienenelemente 2.

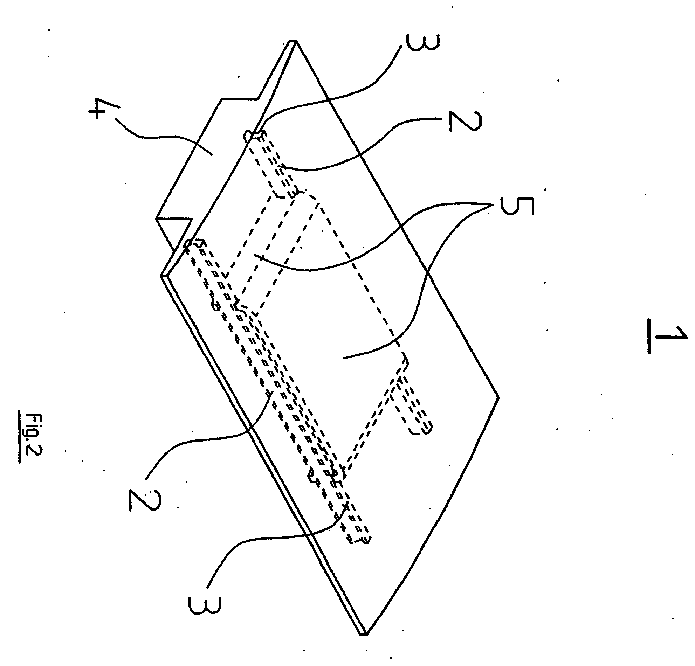

Nach Vormontage der Anordnung gemäß Figur 1 wird diese in ein - nicht dargestelltes - Spritzgießwerkzeug eingelegt. Das Spritzgießwerkzeug definiert gemäß seiner Kavität ein Formteil, das der äußeren Kontur der zu fertigenden Führungsschiene 1 entspricht. Nach Einspritzen des Kunststoffmaterials in die Kavität des Spritzgießwerkzeugs umgibt dieses sowohl die Schienenelemente 2 als auch das Traggestell 5, so dass der in Figur 2 dargestellte Körper entsteht. Der Figur ist zu entnehmen, dass das Traggestell 5 vollständig mit Kunststoff umspritzt ist, während die Schienenelemente 2 lediglich an der vom Traggestell 5 abgewandten Seite von Kunststoffmaterial frei geblieben sind; diese Seite der Schienenelemente 2 trägt die Führungsbahn 3 für die Wälzkörper.

Die Führungsschiene 1 wird folglich von der äußeren Kontur her im wesentlichen durch den Kunststoffkörper 4 bestimmt, der der Funktion der Führungsschiene 1 angepasst ist.

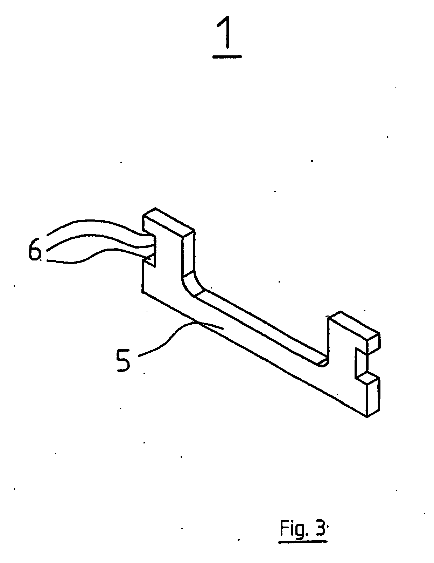

In Figur 3 ist detailliert ein Traggestell 5 zu sehen, wie es zum Halten der beiden Schienenelemente 2 auf Abstand eingesetzt werden kann. Das Traggestell 5 weist - wie bereits oben erläutert - zwei rechteckförmige Ausnehmungen für die Aufnahme der Schienenelemente 2 auf. Dabei sind definierte Flächen 6 so in das Traggestell 5 eingeschliffen, dass beim Einsetzen der Schienenelemente 2 diese in einer sehr exakten Position relativ zueinander gehalten werden.

Hierdurch wird erreicht, dass auch bei starken Temperaturschwankungen im späteren Einsatz des Linearlagers die beiden Schienenelemente und damit die Führungsbahnen für die Wälzkörper exakt auf Abstand gehalten werden und diese Funktion nicht mehr - wie im Stand der Technik - alleine durch den Kunststoffkörper 4 wahrgenommen werden muss.

Die vorgeschlagene Führungsschiene für ein Linearlager weist damit eine höhere Präzision im Betrieb auf. Sie ist trotzdem kostengünstig herstellbar.

Sie weist damit eine hohe Steifigkeit trotz geringem Gewicht auf, was durch eine Art Fachwerk erzeugt wird, die Schienenelemente 2 und Traggestell 5 miteinander bilden. In die vorgeschlagenen Führungsschienen können diverse Zusatzfunktionen integriert werden.

Die relativ ungenauen und instabilen Führungen aus Kunststoff werden damit effizient versteift, wobei es nicht nötig ist, die Grundkörper aus teuerem Werkstoff (z.B. Aluminium oder Magnesium) herzustellen, was im übrigen mit kostenintensiven Bearbeitungsvorgängen (z.B. Fräsen) einhergeht. Die vorgeschlagene Führungsschiene ist damit sehr preiswert herstellbar.

Sie eignet sich in besonders guter Weise als steife Linearführung, z.B. für den Einsatz im Automobil, wo es sowohl auf kostengünstige Herstellung als auch auf geringes Gewicht ankommt.

### Bezugszeichenliste

- 1: Führungsschiene
- 2: Schienenelement
- 3: Führungsbahn
- 4: Kunststoffkörper
- 5: Traggestell
- 6: definierte Flächen

## Patentansprüche

1. Führungsschiene (1) für ein Linearlager, die zwei Schienenelemente (2) mit einer Führungsbahn (3) für Wälzkörper aufweist, wobei die Schienenelemente (2) mit einem Kunststoffkörper (4) verbunden sind oder an diesen angrenzen, wobei der Kunststoffkörper (4) den Grundkörper der Führungsschiene (1) bildet und wobei die Schienenelemente (2) mit einem metallischen Traggestell (5) verbunden sind, das zumindest teilweise vom Material des Kunststoffkörpers (4) umgeben ist,
**dadurch gekennzeichnet, dass**
die Schienenelemente (2) und das metallische Traggestell (5) separate Teile bilden, die vor dem Anbringen des Kunststoffkörpers (4) zusammengebaut werden, wobei das Traggestell (5) definierte Flächen (6) für die Anlage des Schienenelements (2) bzw. der Schienenelemente (2) und deren Positionierung in genau vorgegebener Position aufweist und wobei das Traggestell (5) zwischen den Schienenelementen (2) so angeordnet ist, dass es diese auf Abstand hält.

2. Führungsschiene nach Anspruch 1, **dadurch gekennzeichnet, dass** die beiden Schienenelemente (2) an sich gegenüberliegenden Endbereichen des Kunststoffkörpers (4) angeordnet sind.

3. Führungsschiene nach einem der Ansprüche 1 oder 2, **dadurch gekennzeichnet, dass** das Schienenelement (2) bzw. die Schienenelemente (2) und das Traggestell (5) mit dem Material des Kunststoffkörpers (4) umspritzt sind.

4. Führungsschiene nach einem der Ansprüche 1 oder 2, **dadurch gekennzeichnet, dass** das Schienenelement (2) bzw. die Schienenelemente (2) und/oder das Traggestell (5) mit dem Kunststoffkörpers (4) über eine Schnappverbindung verbunden sind.

## Claims

1. A guide rail (1) for a linear bearing, which has two rail elements (2) with a guide track (3) for rolling elements, wherein the rail elements (2) are connected to a plastics body (4) or adjoin the latter, wherein the plastics body (4) forms the base member of the guide rail (1) and wherein the rail elements (2) are connected to a metal support frame (5) which is surrounded at least partly by the material of the plastics body (4),
**characterised in that**
the rail elements (2) and the metal support frame (5) form separate parts which are assembled before the attaching of the plastics body (4), wherein the support frame (5) has defined surfaces (6) for the application of the rail element (2) or rail elements (2) and their location in an accurately predetermined position, and wherein the support frame (5) is arranged between the rail elements (2) so that it keeps the latter spaced apart.

2. A guide rail according to Claim 1, **characterised in that** the rail elements (2) are mounted on opposing end zones of the plastics body (4).

3. A guide rail according to either Claim 1 or 2, **characterised in that** the material of the plastics body (4) is injection-moulded around the rail element (2) or the rail elements (2) and the support frame (5).

4. A guide rail according to either Claim 1 or 2, **characterised in that** the rail element (2) or the rail elements (2) and/or the support frame (5) are connected to the plastics body (4) by way of a snap-fit connection.

## Revendications

1. Rail de guidage (1) pour palier linéaire qui présente deux éléments de rail (2) avec chacun une piste de guidage pour des corps roulants, ces éléments (2) étant reliés à un corps en matière plastique ou montés en limite de celui-ci qui constitue le corps de base du rail (1), les éléments de rail (2) étant reliés à un châssis porteur (5) métallique qui est entouré au moins en partie par le matériau du corps en matière plastique (4), **caractérisé en ce que** les éléments de rail (2) et le châssis porteur métallique (5) sont des pièces séparées qui sont assemblées avant la réalisation du corps en matière plastique (4), le châssis (5) présentant des portées définies pour assurer l'appui du ou des éléments de rail (2) avec positionnement de ceux-ci dans une position exacte prédéfinie, le châssis porteur (5) étant disposé entre les éléments de rail (2) de manière à maintenir ceux-ci espacés l'un de l'autre.

2. Rail de guidage selon la revendication 1, **caractérisé en ce que** les deux éléments de rail (2) sont disposés dans des zones d'extrémité opposées du corps en matière plastique (4).

3. Rail de guidage selon la revendication 1 ou 2, **caractérisé en ce que** l'élément ou les éléments de rail (2) ainsi que le châssis porteur (5) sont, par injection, entourés par le matériau du corps en matière plastique (4).

4. Rail de guidage selon la revendication 1 ou 2, **caractérisé en ce que** l'élément ou les éléments de rail (2) et/ou le châssis porteur (5) sont reliés au corps en matière plastique (4) par une liaison par encliquetage.
